(19) Europäisches Patentamt / European Patent Office / Office européen des brevets

(11) **EP 3 693 094 A1**

(12) **EUROPEAN PATENT APPLICATION**

(43) Date of publication:
**12.08.2020 Bulletin 2020/33**

(51) Int Cl.:
**B08B 9/08** (2006.01)  **B65G 21/20** (2006.01)

(21) Application number: **20156597.5**

(22) Date of filing: **11.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.02.2019 CZ 20190073**

(71) Applicant: **WashZone s.r.o.**
**11000 Praha (CZ)**

(72) Inventors:
- **Srp, David**
  **28912 Trebestovice (CZ)**
- **Kalina, Luká**
  **66902 Dyjákovicky (CZ)**

(74) Representative: **Sedlák, Jirí**
**Okruzni 2824**
**370 01 Ceské Budejovice (CZ)**

(54) **A BUILT-IN PRESSURE AND FIXING CRATE SYSTEM DESIGNED FOR CRATE WASHING LINES**

(57)    Built-in pressure and fixing crate system (13) designed for crate (20) washing lines (21) and boxes is composed of flexible segments (1), and provides for fixing of crates (20) as they pass through the washing line (21). Due to the fixation, the crates (20) are effectively washed and the washing line (21) does not jam as a result of undesired movement of crates (20) in the wash zone (22) of the washing line (21). The flexible segments (1) can be placed on the existing frame (23) of the washer or on a built-in frame (23) which can be sliding. The flexible segments (1) may be plastic or movable, wherein the plastic flexible segments (1) have a pressing force corresponding to the material from which they are made. The movable flexible segments (1) are made of a rigid material, predominantly of metal, and the pressing force is provided by their flexible components, such as springs or pistons.

Fig. 6 B

EP 3 693 094 A1

**Description**

<u>Field of Technology</u>

Crate washing lines

<u>State of the Art</u>

Important parameters for washing lines are the quality of washing and smoothness of operation. Both parameters largely depend on the settings of the washing line, but are also largely influenced by the parameters and dimensions of the line itself. Shaping the wash zone of the line is important when washing crates or boxes of various shapes and sizes. As a rule, the wash zone of the line is dimensioned for the largest crates which are guided through the washing line by means of guide rails onto which they fit closely at small distances from each other. When smaller crates are washed that do not fit closely onto the guide rails of the washing line, undesirable movements of the crates inside the wash zone occur, and often the smaller crates are jammed inside the wash zone of the line.

At present, the washing lines for crates or boxes are realized in several ways. One is to carry the crates by means of pins, wherein the pins are located on one or more chains extending longitudinally through the entire washing line, which carry the crates or boxes and pull them through the entire washing line. The crates are thus pulled in the direction of travel, but they are not fixed in the wash zone of the line from the sides or from above. Pressurized water often tosses the crate sideways and up/down in the wash zone of the line, wherein it depends on the height of the wash zone or wash zone bounded by the guide rails, height of the crate and height of the guide pin, whether the crate is still pulled through the washing line by the pin or whether it can slip from the pin when lifted by pressurized water and jam in the wash zone of the line. Washing lines realized in this way are highly liable to failure and the operation of such washing line must be under constant supervision.

Another way of realizing the washing lines is to guide the crates through the washing line by means of fixed side plates, whereby the crate is secured in the direction of travel by solid side plates or side guide rails. While the side plates partially fix the crate from sides, the crate has the freedom to move up and down, and with the pressurized water jets, the crate is repeatedly lifted up and pressed against the line, which often results in jamming of the crate in the line or poor washing due to uneven pressure of the water jets. In addition, washing the crates from sides at the point of contact with the side plate is very limited.

The existing washing line designs do not allow efficient attachment of crates or boxes to be washed in a fixed position, and so often they are tipped over or twisted by action of the pressurized water, resulting in either poor washing of the crate and/or jamming in the washing line, which results in a technological failure of the washer.

Factors influencing technological failures

- Different height in a row of consecutive crates affects the nozzle pressures on individual crates
- Different nozzle pressures from different angles on a large crate with different crate height when passing through the washing line
- Different nozzle pressures from different angles on a small crate with different crate height when passing through the washing line. The factor is multiplied by the fact that small crates move in different distance from the nozzles - in the middle or along either side of the track. Thereby a different water pressure hits it from different sides at different angles, which in turn makes twisting of the crate and its jamming in the track easier.
- Crates are collapsible - when crates jump off the pins and are under water pressure from the side nozzles, that is on the shorter side of the crate, they collapse into the base platform and get jammed on the frame, wall of the washer, they are twisted or turn over by the water pressure, causing a technological failure.
- The crate has no possibility of being firmly fixed all the way through the washing line and it is not possible to wash each individual crate efficiently under high pressure.
- At higher speeds, it is not possible to efficiently wash the long side of the crate only by passing under the nozzle so that the water pressure disrupts the paper label.
- At higher speeds, water usually hits the long side of the crate only by reflection, due to the high speed of the crate being carried and the fact that height of the crates changes when the low one runs immediately behind the high one, i.e. the high crate causes an umbrella effect for the low crate.
- At different crate heights, it is not possible to wash the long side of the crate effectively only by passing through. At certain angles, the nozzle by its tilting towards the crate, the speed of the crate and the pressure, does not cover the entire wall of the crate to ensure the most effective removal of any label located on the long side of the crate.

- Washing crates from underneath - it is almost impossible to wash them under higher pressure; due to pressure the crates are lifted up and turn over or jump off the trailing pins and the crate collapses or gets jammed on the washer installation. These complications arise mainly in places where the crate is in contact with pressurized water, where the water jet from the nozzle acts as a blade on the side of the washer and can move it.
- Low washing efficiency of the standard

## Main Wash section at pressure of 6 bar

If all crate heights are in production, all crates that are smaller than the free interior of the washing line are lifted up and levitated or tipped over due to water pressure. These are generally crates lower than 220 mm due to the height of the pin above the chain (usually 80 mm) and the total free wash zone, which is usually 300 mm high

- Maximum height to the upper stop of the crates (space from the chain to the upper stop is usually 300 mm)
- 300 - 80 = 220 mm, i.e. crates 221 to 300 mm high will be fixed, while other crates become unstable under the water pressure, slide off the pin and begin to destabilize the entire system.

Washing with a standard 20 bar high-pressure module is solved by a fixed nozzle system with hoses connected to the nozzles attached from the side to the washer frame. From above, the crates are rinsed using a shaft terminated by a nozzle head and a motor located on the top outside of the washer. Washing efficiency cannot be increased; higher oscillation cannot be achieved; nozzles do not have a proper angle to cover the whole side of the crate; moreover, there is a risk of electric shock, since the nozzles are motor-driven, with the motor shaft extending through the wall of the washer; and moreover, there is a risk that the simmer-ring seal ruptures and the pressurized water leaks into the motor.

When washing small crates, the nozzles are 20 cm away from the crate on one side or 10 cm from both sides than when washing large crates when the nozzles are 100 to 150 mm away from the crate due to the fixed position of the nozzles from the side.

The standard washing process is carried out in such a way that by the input conveyor the crate is transported to the washer upside down. From the inside, the crate is caught in the washer by the pins of guide chains or conveyor. The pins on the washer chain ensure that the crate does not collapse when passing through the washer, even if the crate is not closed in the locks.

- When passing through the washer, the crate is sprayed with water, which is distributed by means of pumps and the nozzle system. The frame inside the washer, in which several sets of nozzles are installed one above the other or next to each other and mostly with added detergent/disinfection, is divided into the Pre-wash, Main wash, Disinfection Rinse and Clean Water Rinse sections. These nozzle sections are fixed in the washer, wherein the nozzle system exerts pressure of 3, 6 or up to 20 bar on the crate or certain point on the crate from different sides and angles from above, from below and from both sides along the washer guide always against each other to ensure that the crate is fixed. Frequent problems, however, occur when some of the nozzles are clogged because the crate is not subjected to the same counterpressure of the opposing nozzles that keeps it in place without lifting, tipping, folding or twisting in the washer. Furthermore, even when small crate is passing through, the nozzles are on one or both sides more or less distant from the crate, i.e. acting again on the crate or certain point on the crate by different pressures.
- After washing and rinsing with clean water, the crate is taken out from the washer onto the outlet conveyor.
- Each crate guiding line includes two to three guide chains, depending on whether the washer washes small crates of 400 * 300 mm or large crates of 600 * 400 mm.
- If the washer washes small type of crates, a side pull-out guide is added next to the chain along its entire length, which rises about 50 mm above the chain level when washing small crates to form a side plate to prevent small crates from slipping off the line and causing jamming - clogging the washer or breaking the chain.
- In the case of washing large crates, this side plate is fixed on both sides, stationary, installed 50 mm above the level of the washer chain.
- In the interior of the washer there is an adjustable guide suspended against the chain on the ceiling of the wash zone along the entire length of the washer to ensure the stability of crates so that the crates do not jump off the chain.
- The crates placed on the guide conveyor are spaced from 100 to 150 mm and are of different heights. A high crate in front of a low crate acts as an umbrella on the side of the low crate, thus preventing water to reach the low crate side in such amount under the same pressure, when it is not possible to guarantee the same amount of water and same pressure falling on the long wall of the crate at higher speeds.

## Length of a standard washer used for this calculation is 18.6 m

Standard washer speed is 0.3 m/s = 1800 crates/hour; label washing efficiency is around 30 %.

The high-pressure module washer speed is 0.85 m/s = 2,600 crates/hour; label washing efficiency is around 50 %.

Labels are attached to the shorter side of the crates. This side must therefore be subjected to the most powerful and efficient washing.

As a standard, large crates with a plan size 600 * 400 mm and height from 20 mm (folded crate carried along the conveyor between the carrier pins) to 300 mm, small crates with a plan size 400 * 300 mm and height from 20 mm to 300 mm are washed.

**Flow rates:**

Standard washer -      flow rate 95 $m^3$/h = 25 l/s

HP module washer -     flow rate 15 $m^3$/h = 4 l/s

**Nozzles for the Main Wash section**

Standard washer -      flow rate 95 $m^3$/h = 6 nozzles on each side

HP module washer -     flow rate 15 $m^3$/h = 5 nozzles on each side

Existing fixation of crates

The crate can be fixed from above to prevent it from jumping off the pin, but only when washing one single predetermined crate height and/or fixing only the highest crate of a row of consecutive crates of different heights, typically crates of 300 mm height. Crates smaller than the difference between the maximum space for the crate from the chain/ conveyor to the upper stop and the pin height (here 300 mm - 80 mm = 220 mm) are lifted or tipped over by the water pressure. When the crate levitates above the pin due to the water pressure, the water pressure from the side locks it and the crate falls back, gets stuck or breaks the chain.

Existing crate washers cannot fix any lower crates than the set maximum height, wherein the highest crates are fixed with rigid guide rails and the lower crates are not fixed from above at all.

The closest prior art is represented by document NL 1014204, which describes plastic guide elements with stop surfaces, which are located in the interior of a washing line similar to guide rails, wherein the guide elements are positioned at a height above the supporting surface of the crate or the guide elements are pushed off by the passing crate against the force of a spring contained in each of these guide elements. The guide elements are made of plastic, a material which, in the presence of lots of chemicals inside the washer, becomes very brittle and wears very quickly. Moreover, an inaccurately defined positioning of guide elements leaves room for the crate to jump up or slip off the guide pin, i.e. the crate is not under control at every moment of passage through the wash zone, which in many cases leads to jamming of the entire washing line and huge material and financial losses. The solution according to NL 1014204 is therefore not applicable in practice.

Description of the Invention

The continuous fixation of crates of different heights running in succession is solved by a built-in crate pressure-fixing system for crate washing lines, which provided simultaneous washing of crates of different heights, wherein during washing the crates are fixed from above at different heights according to the crate height, and on the sides the crates are pressed from both sides with defined spacing according to the length of the crate, which completely prevents lifting or jamming of the crates in the wash zone, so high water pressures can be used for high-quality washing

The built-in pressure-fixing system consists of at least two pairs of flexible segments. The length of the wash zone increases the required number of flexible segments. The pairs of flexible segments in the wash zone of the washing line are always placed opposite each other on opposite sides / frames of the wash zone.

The flexible segments are fixed at one end to the frame at fixing points. The other end of flexible segments remains free, protrudes to the wash zone of the line and opens and is deformed by the crate passing through. The fixing points of one pair of flexible segments lie on the connecting line of fixing points. The connecting line of fixing points is perpendicular to the axis of crate travel through the wash zone of the line.

The flexible segments are usually mounted on their own fixed or sliding frame, which is subsequently mounted as a side frame of the internal wash zone into the existing washing lines, or the pairs of flexible segments are mounted directly on the internal side frames of the existing washing lines.

As the crate moves through the internal wash zone of the washing line, the passing crate is attached along the sides and from above. Fixing of crates at several heights at the same time is made possible by the action of flexible segments, wherein the natural position of each flexible segment is in a closed position. The flexible segments located at a height lower than the crate height are opened by the passing crate and act as pressure side guides of the passing crate, since they exert their pressing force on the passing crate from the sides, which acts against the direction of opening of the flexible segment. The pressing force of the flexible segments in one pair is equal and oppositely oriented, whereby the flexible segments in one pair also centre the crate on the axis of the conveyor. The flexible segments located higher than is the height of the crate remain closed and work as the crate's stop from above, thus preventing the crate from jumping off the pin of the chain conveyor. After the crate has moved further, when it no longer acts on the flexible segment, the flexible segment closes itself or returns to its natural position.

The flexible segments are preferably arranged one after the other in a horizontal direction, preferably in several rows/levels, preferably one above the other in a vertical direction, preferably in several columns, or in inclined rows, so that at least two flexible segments always fix the crate from each side.

For correct pressing and fixation action of pairs of opposing flexible segments on the crates in the interior of the washing line, the segments on opposite frames are arranged as follows:
The spacing of individual flexible segments on one level along the conveyor travel axis is determined not only by the size of the crates to be washed but also the length of flexible segment in the conveyor travel direction.

The distance $a$ of the flexible segments or fixing points, parallel to the axis of travel in two adjacent columns or oblique rows on one frame, i.e. the spacing $a$ between individual fixing points of flexible segments is formed by the dimension given by the relation $a < (r + p_D) / 2$, i.e. the spacing of two fixing points is always less than half the sum of the length of the crate side parallel to the travel axis $p_D$ and the length of the flexible segment $r$, or the distance of perpendiculars to the crate travel axis, wherein one perpendicular passes through the fixing point of the flexible segment and the other through a point at the free end of the flexible segment.

This ensures that when the crate passes through the wash zone, it is always fixed by at least two flexible segments from each side thereof.

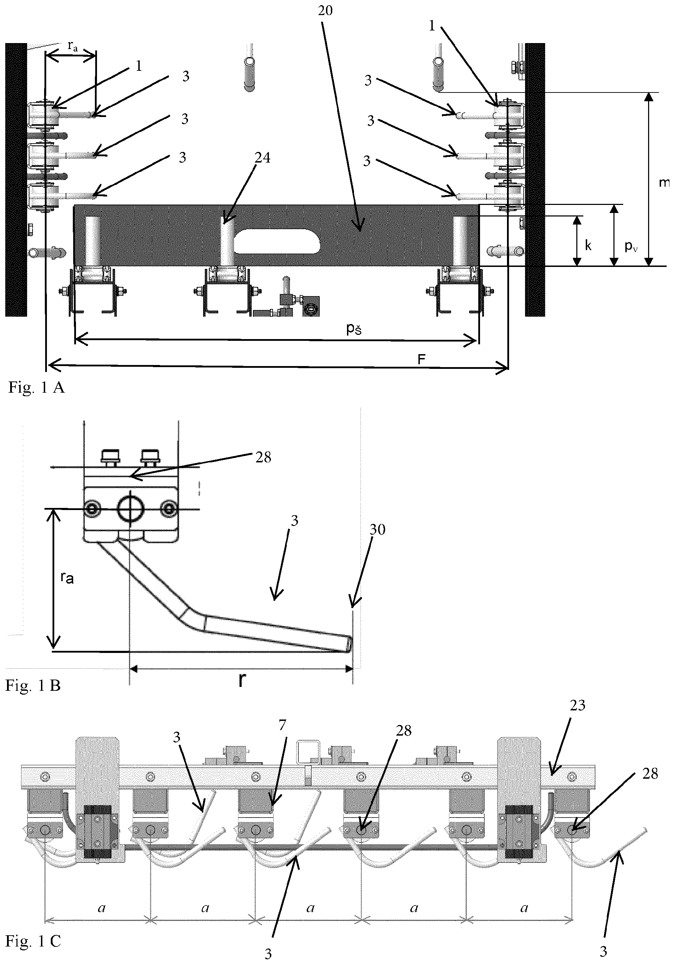

To prevent the crate from coming out of the pins on the conveyor, the space above the pin must not be higher than the crate itself. Therefore, limits are set taking into account the height of the pin, the height of the crate and the upper stop, which is either a closed flexible segment or an upper guide bar. The dimensions are illustrated in Figures 1A and 1B.

The height of location of flexible segments is governed by the following rules:

If $p_V > m - k$, then the pairs of flexible segments are located at any height of the internal wash zone or are preferably arranged on at least one level of each side of the frame, wherein the levels of both frames are situated at the same height;

If $p_V \leq m - k$, then at least one height of pairs of flexible segments is at most $p_V + k$, preferably the flexible segments are arranged on at least one level, wherein the height of the at least one level of pairs of flexible segments is at most $p_V + k$;

where $p_V$ is the height of the crate; $m$ is the height of the internal wash zone of the washing line, which is bounded by the upper guide bar and the conveyor; and $k$ is the height of the carrier pin.

This ensures perfect fixation of crates from the side and especially from above, and it is possible to place crates of any height on the conveyor, one after another. The crate cannot jump off the carrier pin because the pressurized water cannot lift it higher than the top of the carrier pin. When large crates are lifted up, they hit the upper guide bars of the wash zone, while when the small ones are lifted up, they hit the level or at least a pair of closed flexible segments protruding into the wash zone of the line and acting as an upper stop for the crate. At the same time, the large crates are fixed from the sides by open pressure flexible segments, and the small crates may also be fixed from the sides by another level of open flexible segments, or optionally spaced pairs of flexible segments.

The flexible segments mounted on the frame are located at a maximum height of $p_V + k$ from the conveyor, and are preferably located at a height of $(p_V + 1/10k)$ to $(p_V + 8/10k)$ from the conveyor, i.e. the first level of flexible segments is located just above the plane of the top of the carrier pin.

Or, preferably, the flexible segments are mounted on the frame at two heights, i.e. $k + 1/3(m-k)$ and $k + 2/3(m-k)$.

Ideally, the flexible segments are preferably mounted on the frame at three heights, i.e. $k + \frac{1}{4}(m-k)$, $k + 2/4(m-k)$ and $k + \frac{3}{4}(m-k)$ from the conveyor, where any consecutive crate heights can be well fixed.

In a standard washing line sized for 8 to 30 cm crates, it is preferable to locate at least two levels of flexible segments, wherein the first level is located at a height of 9 cm from the conveyor, provided that the carrier pin is less than or equal to 8 cm and the second level is located at a height of 25 cm from the conveyor.

Also important is the width of location of the flexible segments, i.e. the length *F* of connecting line of the fixing points of the pair of flexible segments, or the distance of ends of the arms from the fixing points in a direction perpendicular to the crate travel axis. When the flexible segments are being open by the crate passing through, it is preferable if the greatest possible lever acts on the flexible segment, that is when the crate interacts with the flexible segment arm as far as possible from the fixing point but at least 8 mm from the end of the arm in a direction perpendicular to the crate travel axis. This ensures that the crate - elastic segment interaction is stable. Preferably, the length *F* of connecting line of the fixing points of a pair of flexible segments is less than or equal to the crate width + 2times the distance of the ends of arms from the fixing points in a direction perpendicular to the crate travel axis - 16 mm; and at the same time greater than or equal to the crate width + $r_a$, that is

$$p_{\check{s}} + r_a \leq F \leq p_{\check{s}} + 2\cdot (r_a - 8\ mm).$$

*Most preferably,* the length of connecting line of the fixing points of a pair of flexible segments $F = p_{\check{s}} + (2\cdot r_a - 10\ mm)$.

If the length of connecting line of the fixing points of a pair of flexible segments *F* is less than $p_{\check{s}} + 2\cdot (r_a - 10\ mm)$, the crates interact with the arm of the flexible segment near the fixing point and the crate must exert more force to open the segment than in the case of $F = p_{\check{s}} + 2\cdot (r_a - 8\ mm)$, since a smaller lever acts on the flexible segment. In such a case, the crates may suddenly hit the arms of flexible segments, which means a potential opportunity for the crate to jam in the wash zone.

Preferably, the flexible segments are made of a plastic material, synthetic or natural polymers with a suitable elastic profile, for example of nylon, rubber or silicone. Preferably, materials that resist the action of detergents are selected. Preferably, the flexible segments are quadrangular in shape. Preferably, the flexible segment is formed by an elastic plate or brush with bristles, attached to the clamping bar. The pressing force of the polymeric flexible segments is generally determined by the elastic profile of the material of which the flexible segment is made.

Preferably, the flexible segments are movable, made of a rigid material such as metal. Preferably they are made of metal with an inert coating or stainless steel. The pressing force of the movable flexible segments is determined by the mechanism of movement, wherein it usually takes place by means of a spring or a piston.

Preferably, the movable flexible segments are realized by piston segments. The piston segment comprises a profiled arm, with at least one bend, having a sliding hole. A pin affixed to the profile for attaching the flexible segment is put through the sliding hole, wherein the pin is the centre of rotation of the flexible segment. The profiled arm also has a sliding pin on which the piston axis eye is fitted. The other end of the axis is introduced into a piston, which is located on the profile for attaching the flexible segment. The piston provides the pressing force of the flexible segment.

Preferably, the movable flexible segments are realized by spring segments. The spring segment comprises a cylindrical bushing, to the casing of which a pressure profiled arm with at least one bend is connected from the side. The arm is preferably made of profiled rods or a rounded flat body, preferably a flat cut shape, which helps to prevent jamming of the crates being washed. The flat cut shape arm also extends the service life of the flexible segment, since the flat cut shape is connected to the cylindrical bushing by a long joint, preferably a weld, that is stronger compared to a short weld of the arm made of rod. A pin fitted with a spring, mounted in sliding bushes or bearings, preferably ball bearings, passes through the axis of the cylindrical bushing. The spring is secured by insertion into the hole at the end of the pin and the cylindrical bushing, wherein the individual coils of the spring may be close to one another or spaced apart to avoid unnecessary friction. Preferably, the pin has a multi-level head, wherein the first level fits into the internal hole of the base of the cylindrical bushing; the second level fits into the internal hole of the sliding bushing or bearing; and the last level is multi-edge, allowing the spring to be pre-stressed. The pin is locked in place and attached to the cylindrical bushing using the lock washers. Preferably, the lock washers are two and are located on the bases of the cylindrical bushing. Preferably, the locking washer has a multi-edge bore corresponding to the multi-edge pin head. Preferably, the pin or cylindrical bushing is provided with a seal which insulates the inner space of the cylindrical bushing and protects in particular the spring from the ingress of dirt into the inner space of the cylindrical bushing. Preferably, the seal is made of detergent-resistant materials, such as Teflon. Preferably, the entire inner space of the cylindrical bushing is filled with lubricant to ensure optimum spring movement. The preferred lubricant is petroleum jelly. The spring segment is attached to the side frame at the fixing points by means of a spring segment attachment profile. The spring is pre-stressed during installation to exert counter-pressure and fix the crate. The spring pre-stress can be adjusted at any time by simply removing the lock washer, turning the pin, which can be easily realized thanks to the multi-edge head of the pin, and returning the lock washer into place. Always the flexible segments in at least one pair must be set to the same spring pre-stress so that the crate is not misaligned in the wash zone. Preferably, all of the flexible segments in one wash zone are set to the same spring pre-stress to avoid uneven passage of the crate through the wash zone.

Preferably, the flexible segment is mounted to the side frame by a demountable joint, such as a screw with a nut. The side frame can be stationary or movable, built-in or directly part of the washing line. Preferably, the side frame is provided with vertical grooves and the flexible segments are attached to the side frame by means of screws penetrating through these grooves. Thus, it is possible to adjust the height of the individual flexible segments and thus the individual levels of the pressing system. Preferably, the side frame is provided with a vertically positioned T-profile or C-profile with vertical grooves to which the flexible segments are attached.

The speed of the washer with the NEW WP HP high-pressure module is 0.85 m/s = 3,000 crates/hour (similar to a standard high-pressure module); label washing efficiency reaches up to 90 % according to standard label parameters.

**Flow rates:**

$$\text{Washer with WP HP -} \quad \text{flow rate 15 m}^3\text{/h = 4 l/s}$$

**Nozzles for the Main Wash section**

Washer with WP HP - Flow rate 15 m³/h = 8 nozzles from each side (top row permanently movable = works like 16 nozzles by moving the piston 2.5 times within 1 second and the nozzle spray angle ensures constant contact of the pressurized water (not reflected - normally occurs at higher speeds) with the whole one part of the crate (given by the nozzle coverage) which is at the moment under the nozzles during the passage.

As the calculation above shows, the built-in pressure/fixing system for washing lines of the present invention allows stabilization of different sizes and types of crates and boxes as they pass through the wash zone of the line despite the action of pressurized water. Crates do not change their required washing position when passing through the washing line, they are not overturned, they are fixed in an ideal position and the flawlessness of the washing line operation is increased to 100 %. Thanks to the fixing of crates, the smooth running of the washing line is possible without the deflection or jamming of crates in the interior of the washing line and at the same time a quality washing of crates is ensured. In addition, the crate washing speed increases by a further 14 %.

Summary of presented drawings

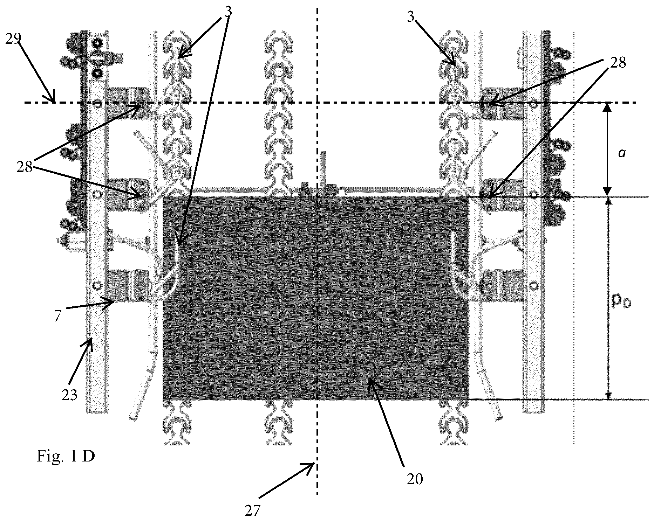

Fig. 1:    A: Placement of the crate 20 in the wash zone of the line; $p_V$ is the height of the crate 20; $m$ is the height of the wash zone 22 of the washing line 21; and $k$ is the height of the carrier pin 24 of the conveyor 14.
B: Geometry of the flexible segment 1; $r$ is the distance of perpendiculars to the axis 27 of the crate 20 travel, wherein one perpendicular passes through the fixing point 28 of the flexible segment 1 and the other perpendicular passes through the free end 30 of the flexible segment 1.
C: Distance of the location of flexible segments 1 in the wash zone 22 of the washing line 21, $a$ is the distance of fixing points 28 of the individual flexible segments 1.
D: Geometry of the internal wash zone 22 of the washing line 21; $p_D$ is the length of the crate 20 along the axis 27 of the crate 20 travel and $a$ is the distance of fixing points 28 of flexible segments 1.

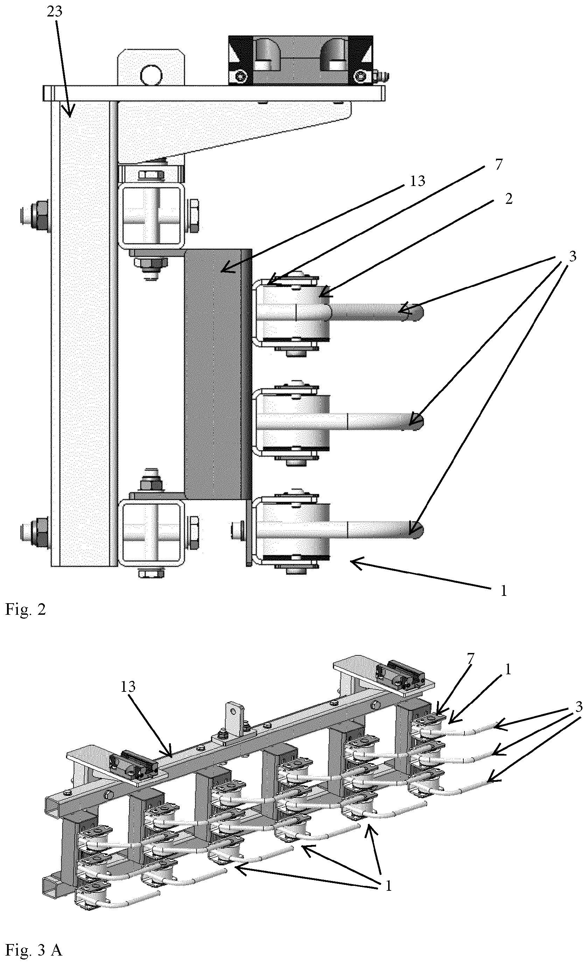

Fig. 2:    Height position of the flexible segments 1 on the built-in frame 23

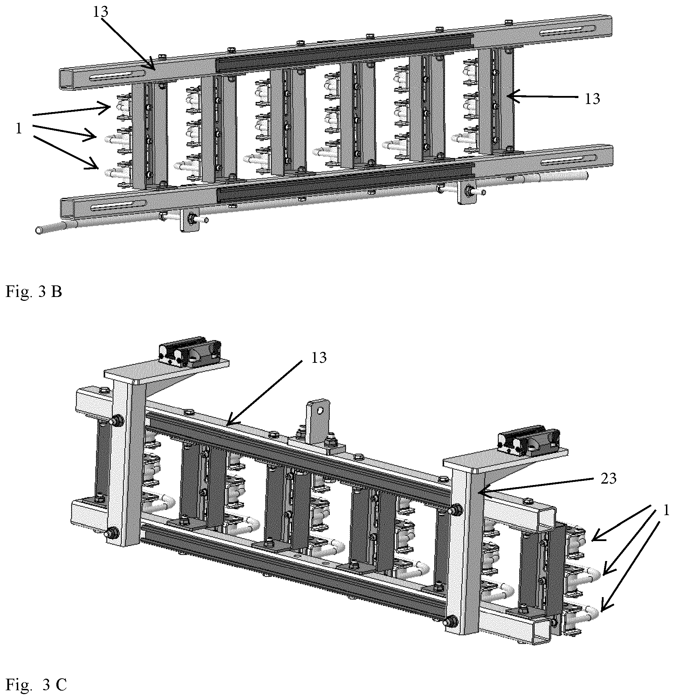

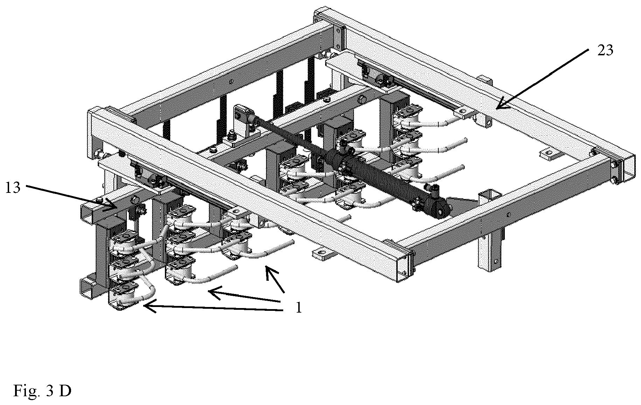

Fig. 3:    Position of the flexible segments 1 on the built-in frame 23;

A: Front side view;
B: Rear view;
C: Rear view, the built-in frame 23 including a positioning system;
D: Front side view, the built-in frame 23 including a positioning system and a supporting frame with piston displacement

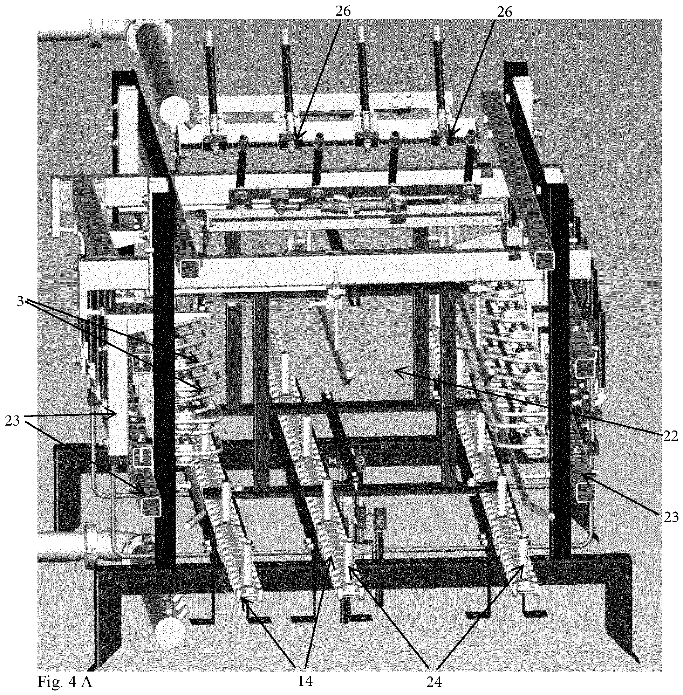

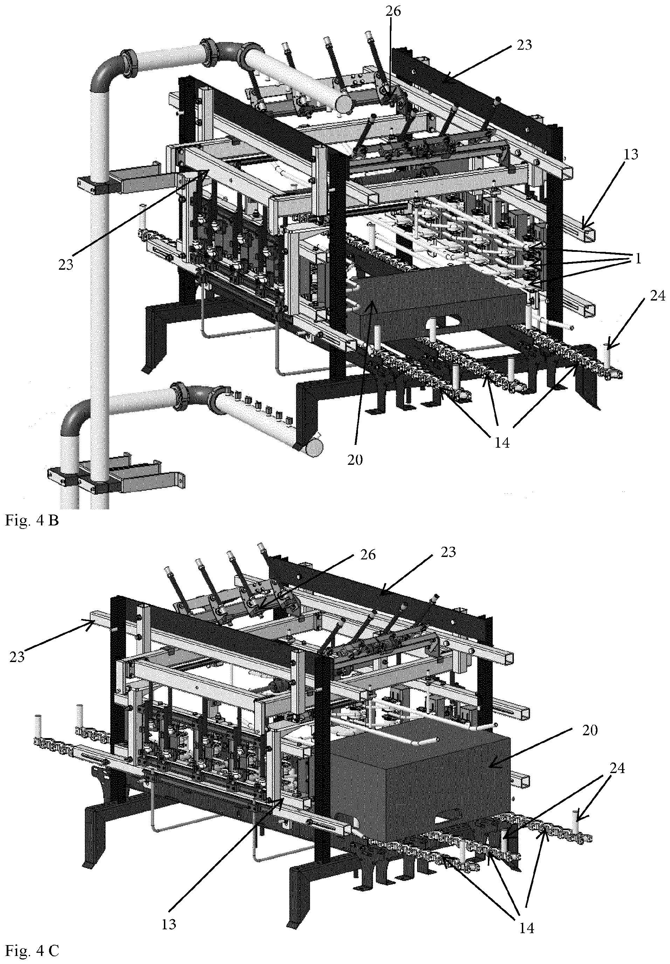

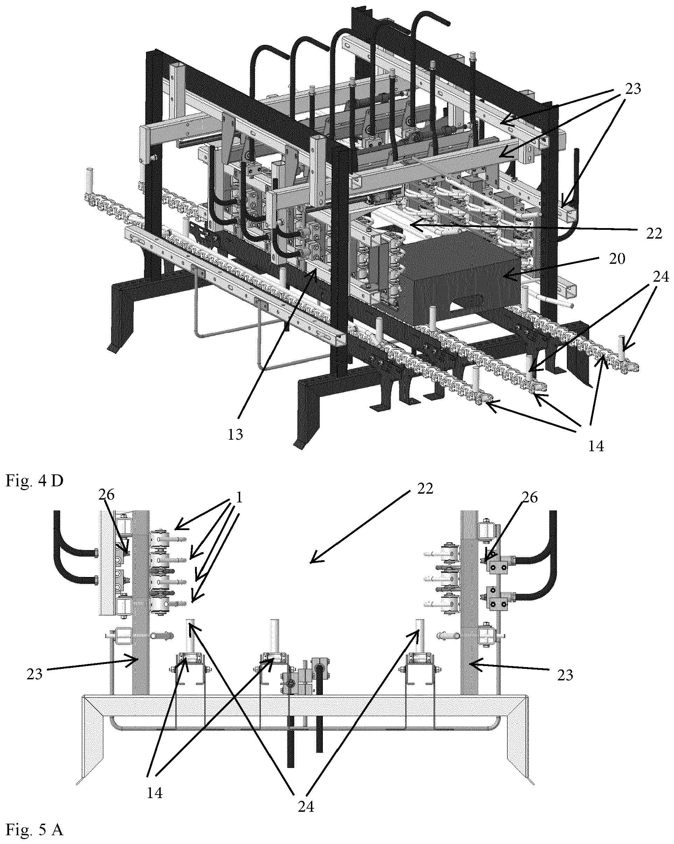

Fig. 4:    Visualization of the wash zone 22 of the washing line 21;

A: Without the crate 20;
B: With the low wide crate 20;
C: With the high wide crate 20;
B: With the low narrow crate 20;

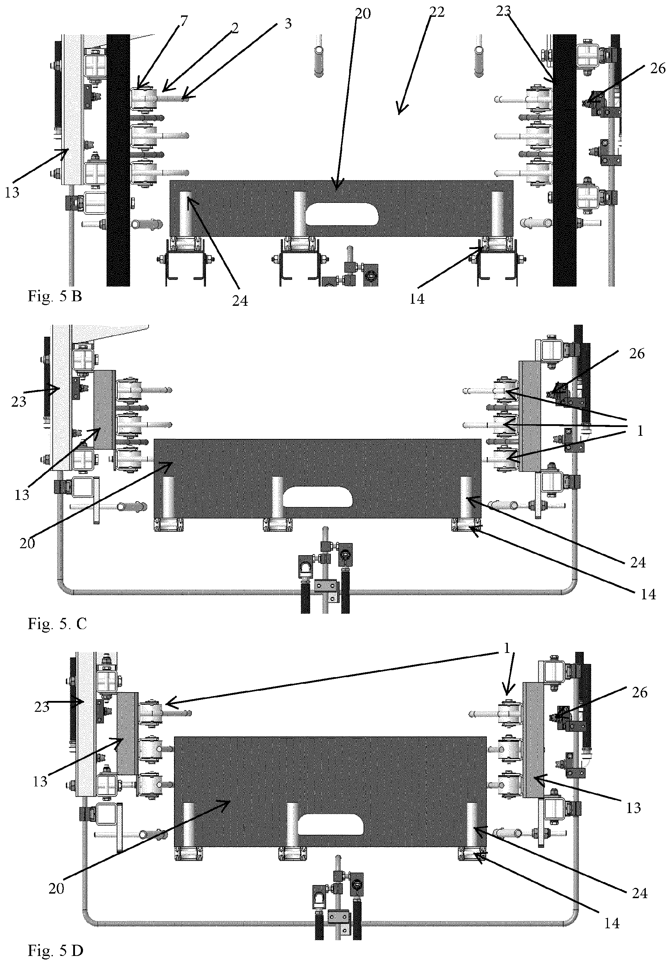

Fig. 5:    Front view of the wash zone 22 of the washing line 21, fitted with three levels of flexible segments 1;

A: Without the crate 20;
B: With the low wide crate 20 without opening the flexible segments 1;
C: With the wide tall crate 20 with opening of one level of flexible segments 1;
D: With the wide tall crate 20 with opening of two levels of flexible segments 1;
E: With the wide tall crate 20 with opening of all three levels of flexible segments 1 with stopping on the upper guide skids

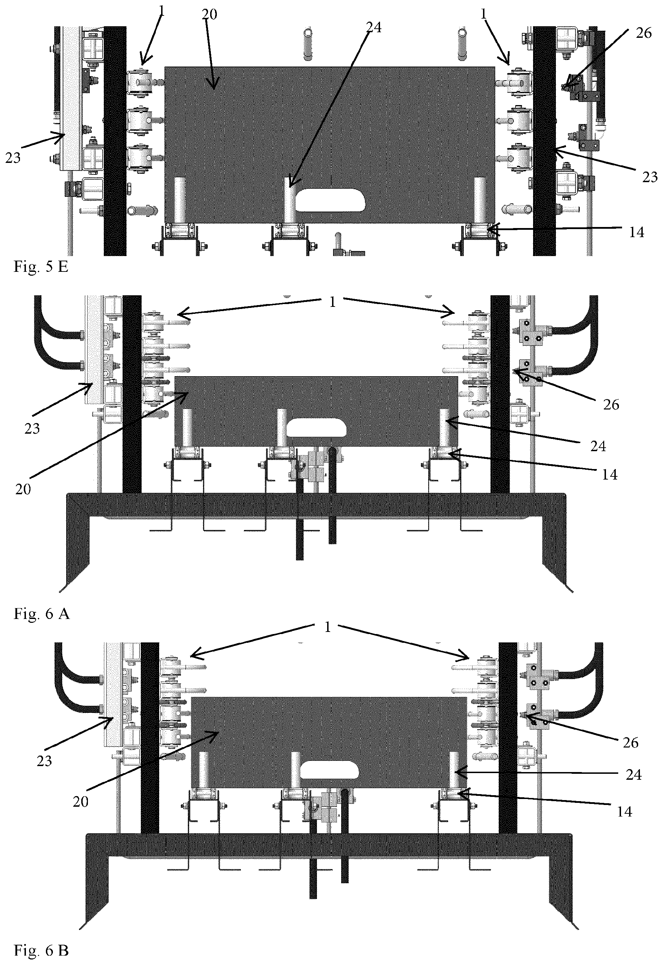

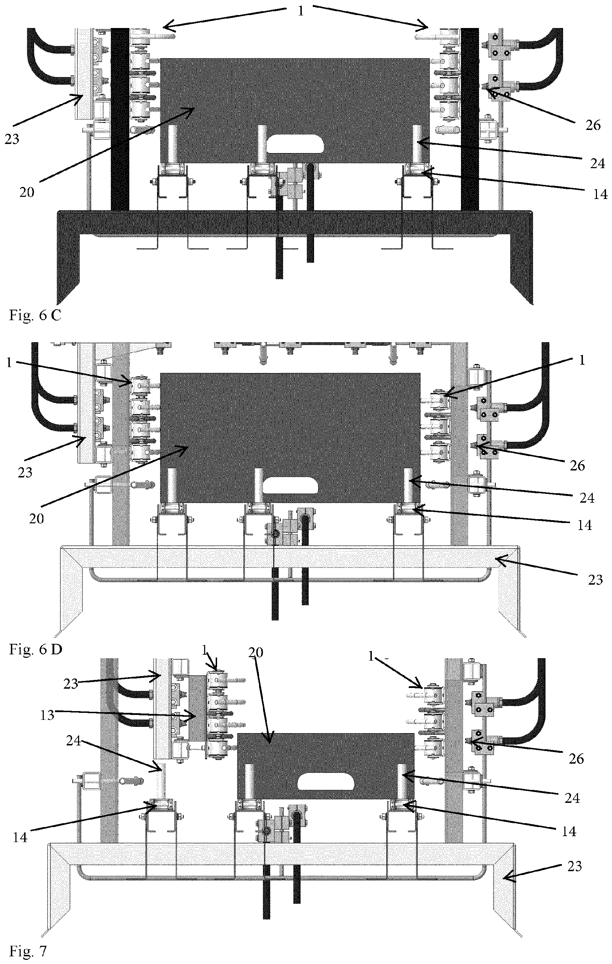

Fig. 6:    Front view of the wash zone 22 of the washing line 21, fitted with four levels of flexible segments 1;

A: With the wide low crate 20 with opening of one level of flexible segments 1;
B: With the wide tall crate 20 with opening of two levels of flexible segments 1;
C: With the wide tall crate 20 with opening of three levels of flexible segments 1;
D: With the wide tall crate 20 with opening of all four levels of flexible segments 1 with stopping on the upper guide skids

Fig. 7:    View of the wash zone 22 of the washing line 21 fitted with four levels of flexible segments 1, a positionable built-in frame 23 adapted for narrow crates 20

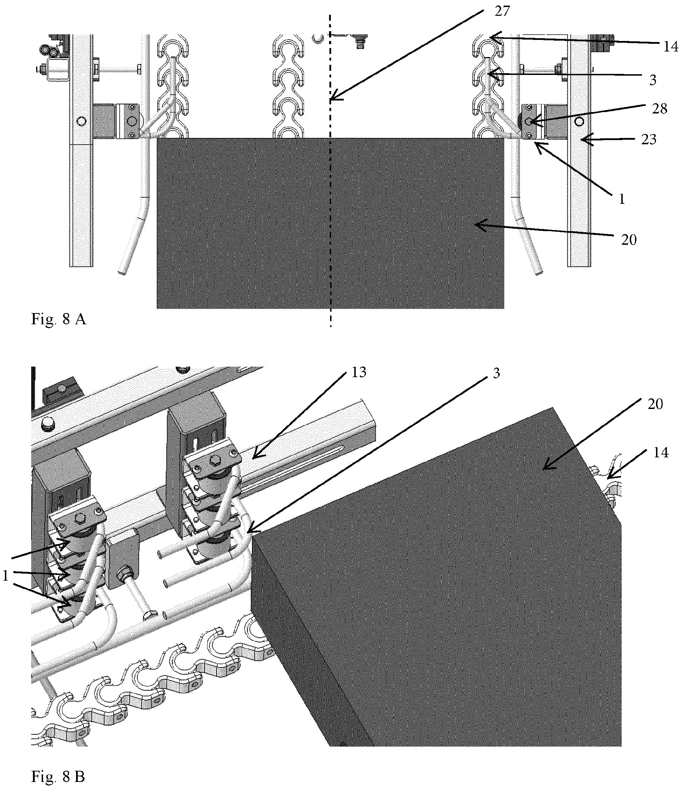

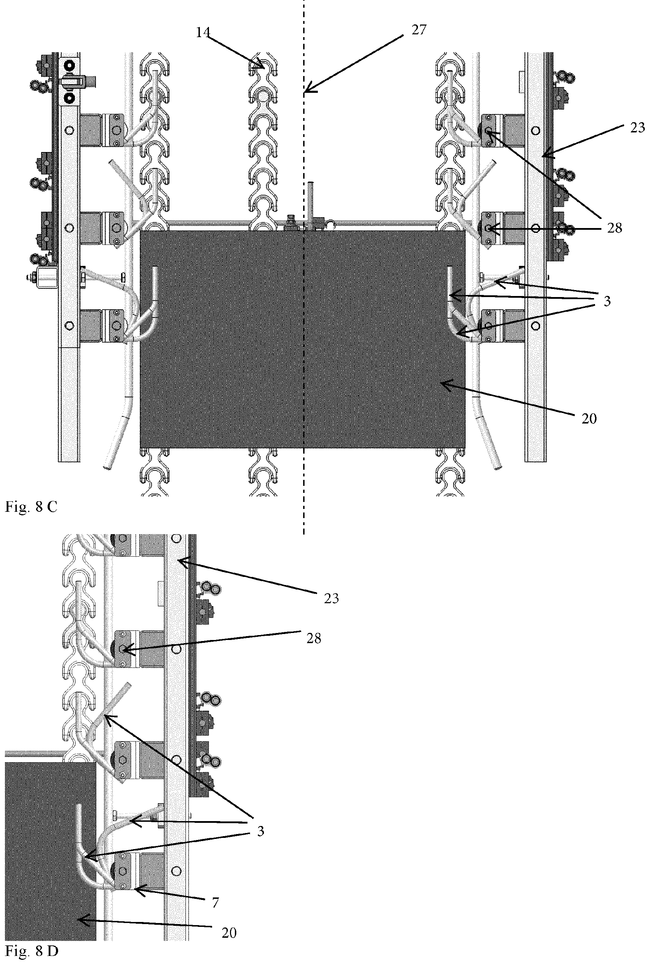

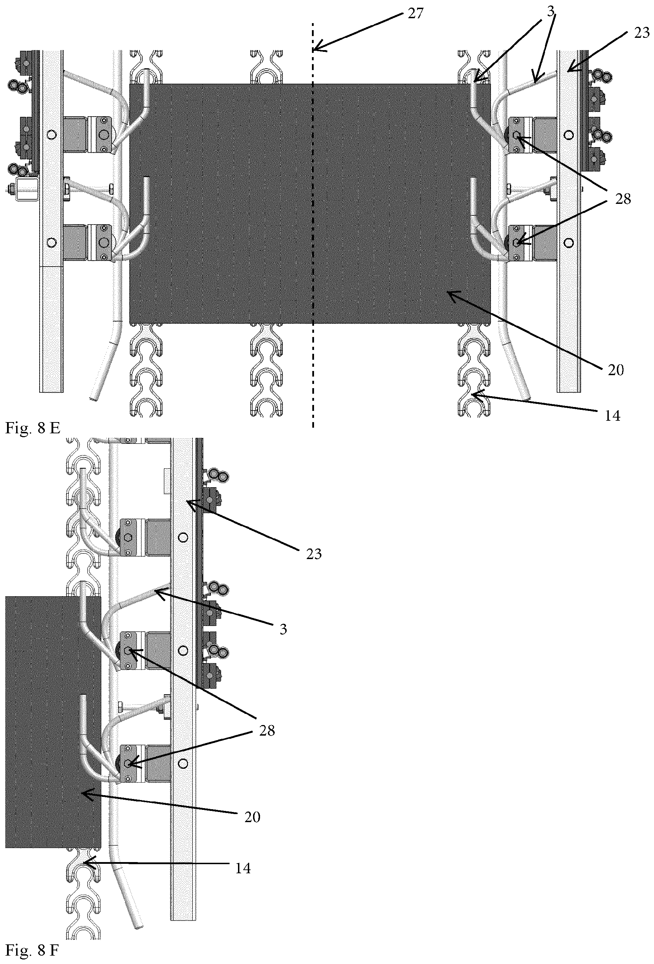

Fig. 8:    Travel of the crate 20 through the wash zone 22;

A: all of the flexible segments 1 are closed, the lower crate 20 approaching the wash zone 22, top view;
B: all of the flexible segments 1 are closed, the crate 20 approaching the wash zone 22, top side view;
C: the first level of flexible segments 1 in the first column is open, the remaining flexible segments 1 are closed, top view;
D: Detail Fig. 8 A;
E: The first level of flexible segments 1 in the first and second columns is open, the remaining flexible segments 1 are closed, top view;
F: Detail Fig. 8 E

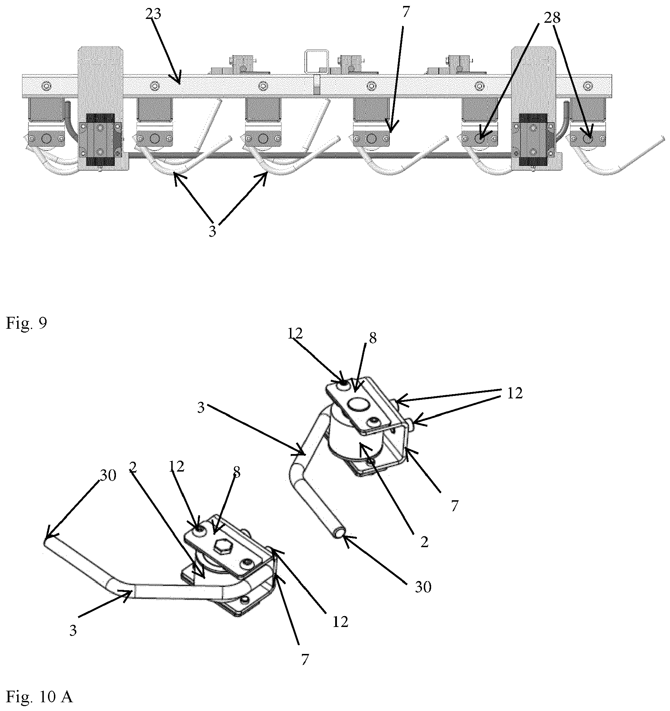

Fig. 9:    Preferred position of the flexible segments 1 on the built-in frame 23

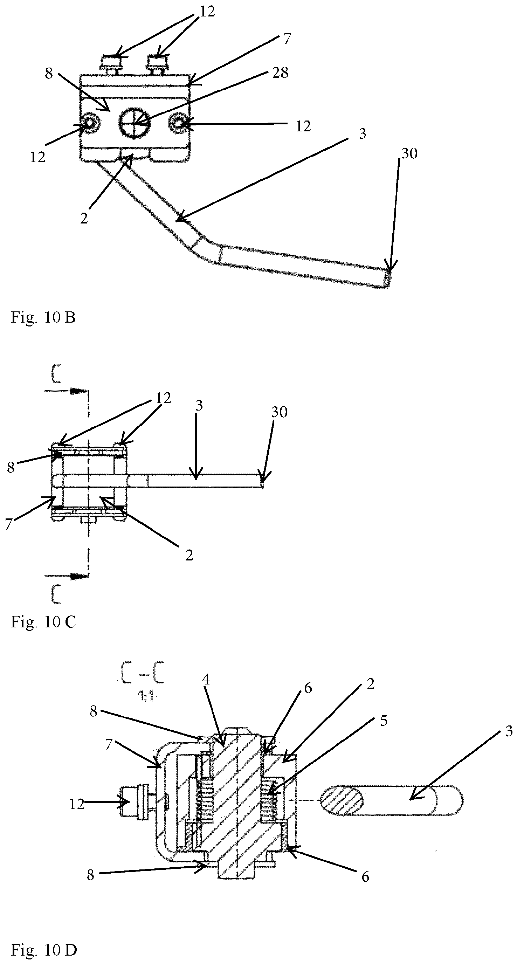

Fig. 10:    Flexible segments 1 - spring segments;

A: Two flexible segments 1 from different views;
B: Left flexible segment 1, top view;
C: Side view of the flexible segment 1, marking the C-C plane
D: Cross-section of the flexible segment 1 consisting of a spring segment in the C-C plane

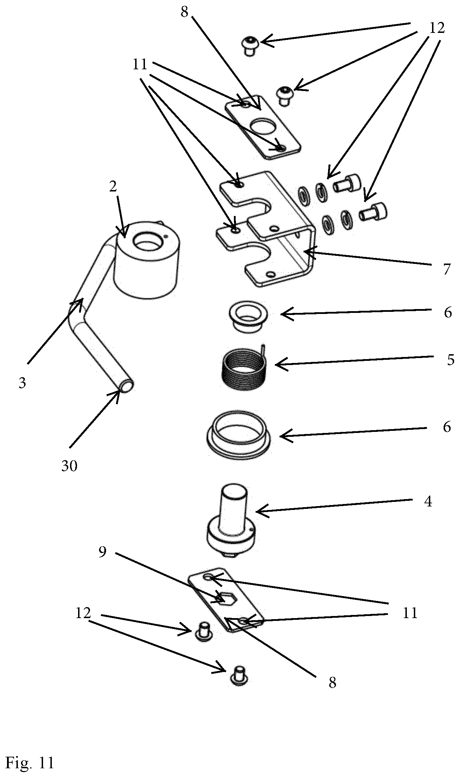

Fig. 11:    Parts of the spring segment

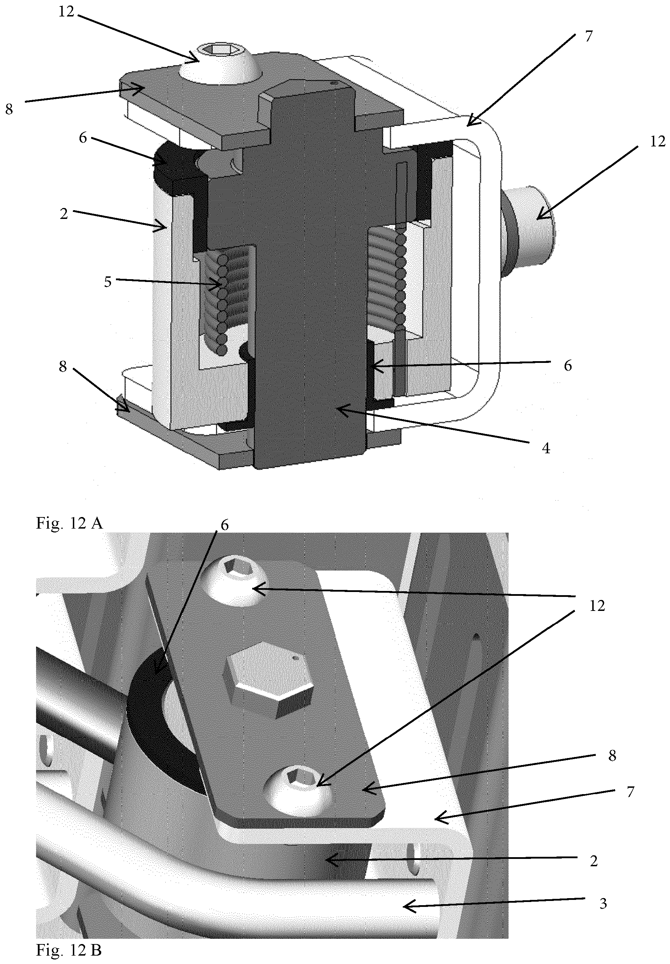

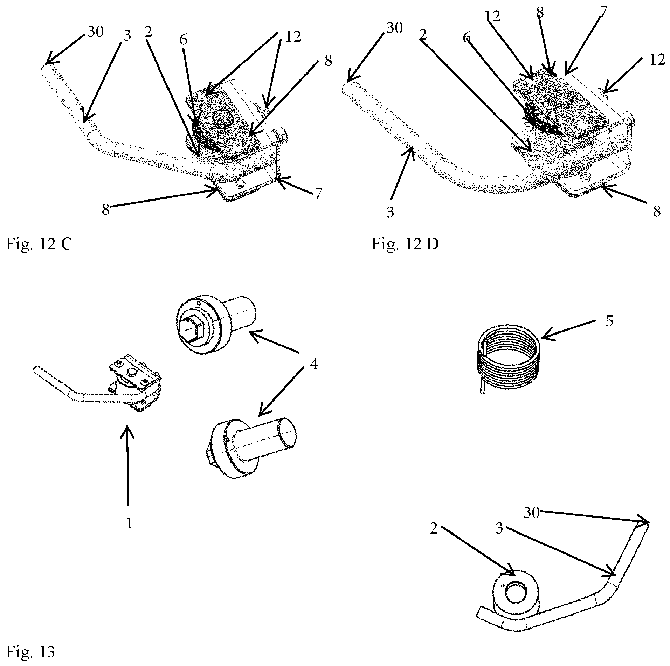

Fig. 12:    Visualization of the spring segment with an arm made of profiled rod;

A: Vertical cross-section of the spring segment;
B: Top side view
C: Double bend of arm 3
D: Single bend of arm 3

Fig. 13:    Parts of the spring segment with an arm made of profiled rod

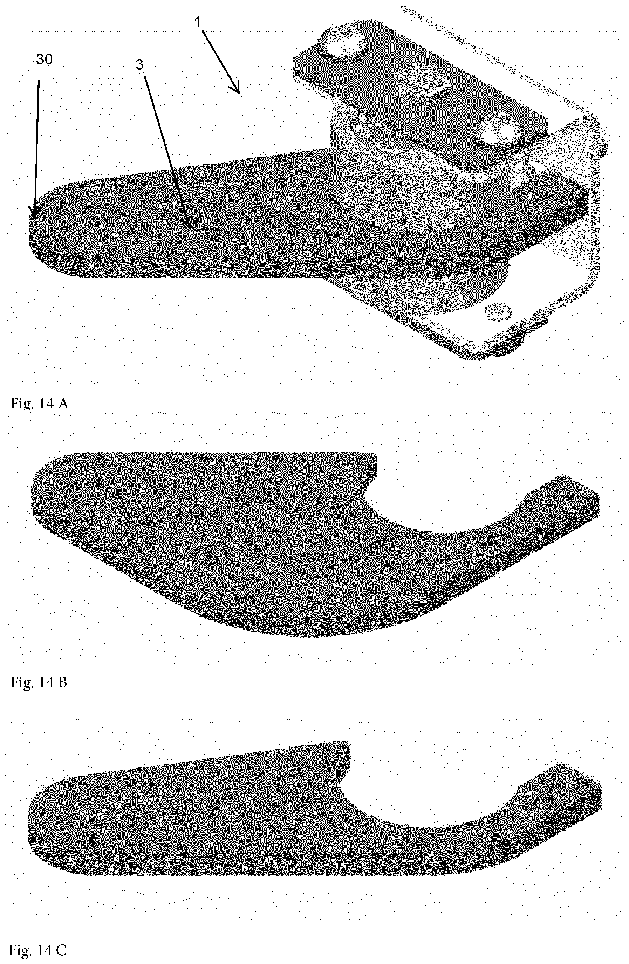

Fig. 14:    Rough drawing of the spring segment with an arm made of rounded flat body - cut shape;

A: Top side view
C: Double bend of arm 3
D: Single bend of arm 3

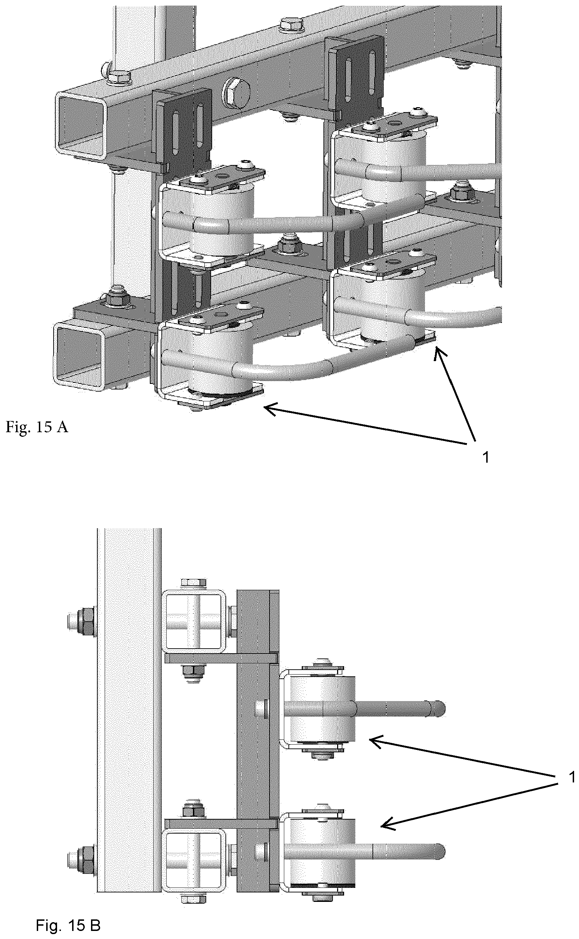

Fig. 15:    Attachment of flexible segments 1 on a T-profile

A: Front side view
B: Side view

Examples of Invention Execution

Example 1

A *Construction of a flexible segment - rubber*

The flexible segment 1 is made of 4mm thick rubber with a tensile strength of 1 to 25 MPa. The flexible segments 1 have a rectangular shape and are fixed with one side in a steel clamping bar. It is possible to attach a plurality of flexible segments 1 in one clamping bar, thus forming the levels. The height of the flexible segment 1 and height position of flexible segments 1 are variable and depend on the height of the crates 20 to be washed. The flexible segment 1 in the clamping bar is ready to be fitted into the wash zone 22 of the washing line 21 or the built-in pressure-fixing system 13.

B *Construction of flexible segments - brush*

The flexible segments 1 are made of polyamide, polyvinyl chloride and polypropylene in the form of bristles 0.8 to 2 mm thick. The bristles are attached on one side to the clamping bar close to each other in one or more rows in succession to form a brush. Each bristle represents one flexible segment 1. The flexible segments 1 in the clamping bar are ready to be fitted into the wash zone 22 of the washing line 21 or the built-in pressure-fixing system 13.

C *Construction offlexible segment - piston*

The flexible segment 1 comprises a profiled arm 3 which is a double-bent steel bar with a resulting angle of 60 to 90 degrees. At the point of bending, the profiled arm 3 has a sliding hole which is the centre of rotation. A sliding pin with an end thread, secured from above by a nut, passes through the sliding hole. From below, the sliding pin is connected to the profile for attaching the arm 3. Between the bends, the profiled arm 3 has the second sliding pin with an end thread. A piston axis with a sliding eye is mounted on the sliding pin and secured from above by a nut mounted on the end thread of the sliding pin. The other end of the piston axis is introduced into the piston located on the profile for attaching the arm 3. In addition, the profile for attaching the arm 3 has two fixing holes 10 for fixing the flexible segment 1. The flexible segment 1 is ready to be fitted into the wash zone 22 of the washing line 21 or the built-in pressure-fixing system 13.

D *Construction of a flexible segment - spring segment*

The spring segment 1 comprises a steel pin 4 with a multi-level head and a steel cylindrical bushing 2, to the casing of which a profiled arm 3 is welded from the side, which is a steel rod or double-bent blinded steel tube with a resulting bend angle of 90 to 110 degrees. The height of the pin 4 is greater than the height of the cylindrical bushing 2. The cylindrical bushing 2 is fitted with sliding bushings 6 on both sub-bases, wherein the outer diameter of the sliding bushings 6 correspond to the outer diameter of the cylindrical bushing 2 and the inner diameter of the sliding bushings 6 correspond to the width of the pin 4. The pin 4 has a multi-level head, wherein one level fits into the cylindrical bushing 2, the second level fits into the profile 7 for attaching the spring segment 1 and the last level is multi-edged. A spring 5 smaller than the height of the cylindrical bushing 2 is put on the pin 4 and one end of the spring 5 is secured by insertion into the hole in the pin 4. The pin 4 fitted with the spring 5 is inserted into the steel cylindrical bushing 2 fitted with sliding bushings 6 and the other end of the spring 5 is secured by insertion into the hole in the inner space of the cylindrical bushing 2. The profile 7 for attaching the spring segment 1 is slid onto the cylindrical bushing 2. Lock washers 8 with locking holes 9 are fitted over the profile 7 for attaching the spring segment 1 to both ends of the pin 4 and thus to both sub-bases of the cylindrical bushing 2. One lock washer 8 with the locking hole 9 corresponding to the width of the pin 4 is fitted first and by means of two mounting holes 11 in the lock washer 8, aligned with the threaded mounting holes 11 in the profile 7 for attaching the spring segment 1, the lock washer 8 is screwed together using the fasteners 12 with the profile 7 for attaching the spring segment 1. The second lock washer 8, with the locking hole 9 corresponding to the multi-edge head of the pin 4, is mounted onto the multi-edge head of the pin 4 and turned against the direction of coiling of the spring 5, thereby pre-stressing the spring 5. The second lock washer 8 is by means of two mounting holes 11 in the lock washer 8, aligned with the threaded mounting holes 11 in the profile 7 for attaching the spring segment 1, screwed together using the fasteners 12 with the profile 7 for attaching the spring segment 1.

The spring segment 1 is ready to be fitted into the wash zone 22 of the washing line 21 or the built-in pressure-fixing system 13.

*E Construction of a flexible segment - spring segment with a flat arm*

The spring segment 1 comprises a steel pin 4 with a multi-level head and a steel cylindrical bushing 2, to the casing of which a profiled arm 3 is welded from the side, which is a flat steel cut shape with an edge that extends into the wash zone of the washer with a double bend and resulting bend angle of 90 to 110 degrees. The height of the pin 4 is greater than the height of the cylindrical bushing 2. The cylindrical bushing 2 is fitted with a seal and a ball bearing on one sub-base, wherein the outer diameter of the bearing corresponds to the outer diameter of the cylindrical bushing 2 and the inner diameter of the bearing corresponds to the width of the pin 4. The pin 4 has a multi-level head, wherein one level fits into the cylindrical bushing 2, the second level fits into the profile 7 for attaching the spring segment 1 and the last level is multi-edged. A spring 5 with an offset coiling of a height less than the height of the cylindrical bushing 2 is put on the pin 4 and one end of the spring 5 is secured by insertion into the hole in the pin 4. The pin 4 fitted with the spring 5 is inserted into the steel cylindrical bushing 2 fitted with bearings and the other end of the spring 5 is secured by insertion into the hole in the inner space of the cylindrical bushing 2. The petroleum jelly is poured into the inner space of the cylindrical bushing 2 through the open end of the cylindrical bushing 2 to fill the entire inner space of the cylindrical bushing 2. Then, a seal is attached to the open end of the cylindrical bushing and the second bearing is put on the pin 4, wherein the outer diameter of the bearing corresponds to the outer diameter of the cylindrical bushing 2 and the inner diameter of the bearing corresponds to the width of the pin 4. The cylindrical bushing 2 is thus closed. The profile 7 for attaching the spring segment 1, which is a flat cut shape with locks, is slid onto the cylindrical bushing 2. Lock washers 8 with locking holes 9 are fitted over the profile 7 for attaching the spring segment 1 to both ends of the pin 4 and thus to both sub-bases of the cylindrical bushing 2. One lock washer 8 with the locking hole 9 corresponding to the width of the pin 4 is fitted first and by means of two mounting holes 11 in the lock washer 8, aligned with the threaded mounting holes 11 in the profile 7 for attaching the spring segment 1, the lock washer 8 is screwed together using the fasteners 12 with the profile 7 for attaching the spring segment 1. The second lock washer 8, with the locking hole 9 corresponding to the multi-edge head of the pin 4, is mounted onto the multi-edge head of the pin 4 and turned against the direction of coiling of the spring 5, thereby pre-stressing the spring 5. The second lock washer 8 is by means of two mounting holes 11 in the lock washer 8, aligned with the threaded mounting holes 11 in the profile 7 for attaching the spring segment 1, screwed together using the fasteners 12 with the profile 7 for attaching the spring segment 1.
The spring segment 1 is ready to be fitted into the wash zone 22 of the washing line 21 or the built-in pressure-fixing system 13.

Example 2

*Installation of spring segments into the existing washing line - one level*

An even number of spring segments 1 assembled according to Example 1D, i.e. spring segments, were fixed to the stationary side frame 23 of the wash zone 22 of the washing line 21 with a pin-chain conveyor 14 by means of fixing holes 10 in the profile 7 for attaching the spring segment 1 using the fasteners 12, which were screws provided with washers with nuts. The first half of flexible segments 1 were mounted on the right stationary side frame 23 and the other half of flexible segments 1 were tipped by 180 degrees relative to the plane of the side frame 23 ('upside down') and mounted on the left stationary side frame 23. After assembly, the free end of the arm 3 is always oriented into the internal wash zone 22 of the washing line 21, in the direction of travel of the pin-chain conveyor 14. All of the flexible segments 1 in the wash zone 22 of the washing line 21 were fixed to the same height and thus formed one level of the built-in pressure-fixing system 13. The height of the level was chosen according to the height of the crate 20 to be washed and the height of the carrier pin 24 - the level of the built-in pressure-fixing system 13 had all arms 3 lower than the sum of the height of the carrier pin 24 and the height of the crate 20.
The crate 20 was low, i.e. the height of the crate 20 was less than the height of the wash zone 22 of the washing line 21 minus the height of the carrier pin 24, i.e. $p_V < m - k$.
The height of crate 20 $p_V$ = 15 cm, the height of wash zone 22 $m$ = 30 cm, the height of carrier pin 24 $k$ = 8 cm, i.e. 15 < 30 - 8. The level of flexible segments 1 was located at a height $p_V + 3/4k$, i.e. 15 + 6 = 21 cm.
Thus, the bottom of the crate 20 being turned upside down and placed in the wash zone 22 of the washing line 21 abutted under the arms 3 of the pressure-fixing system 13 with a gap of 6 cm, which did not exceed the height of the carrier pin 24. So the crate 20 could not jump off the carrier pin 24 as it passed through the wash zone 22, since, when jumping up, the crate 20 was stopped from above by the arms 3 of the pressure-fixing system 13. The individual flexible segments 1 located on one level in the direction of passage of the crate 20 through the wash zone 22 of the washing line 21 were spaced apart by a dimension $a$ smaller than the sum of the length of the crate 20 to be washed in the direction of its travel and the length of the profiled arm 3 divided by two, i.e. $a < (p_D + r)/2$.
The length of crate 20 $p_D$ = 40 cm, the length of arm 3 $r$ = 10 cm. The flexible segments 1 were placed at spacing corresponding to $(p_D + r)/2 - 1/5r$, i.e. (40 + 10)/2 - 2 = 23 cm. The flexible segments 1 were always placed in pairs over the entire length of the wash zone 22, i.e. two flexible segments 1 were placed opposite each other in the wash zone 22 at the same distance from the entrance to the wash zone 22 and at the same height.

After placing all the flexible segments 1 in the wash zone 22, the washing line 21 was started. The crates 20 to be washed were carried by the pins 24 through the wash zone 22. The carrier pins 24 were adjusted to the spacing of the crates 20 to be washed, wherein the spacing of carrier pins 24 was less than the inner width of the crate 20 and at the same time the space between the inner wall of the crate 20 and the carrier pin 24 was no more than 10 % of the width of the crate 20 to be washed. The level of the built-in pressure-fixing system 13 was not opened by the crates 20 but fixed the crates 20 from above and prevented the crates 20 from jumping off the carrier pins 24 due to the action of pressurized water. Thus, the crate 20 being washed was always attached at least under four flexible segments 1 when passing through the washing line 21. At one moment, even under six flexible segments 1. The washing process was smooth, there was no jamming of the washing line 21, nor any of the crates 20 move outside the designated area. Due to the action of pressurized water and the distances between the inner wall of the crate 20 being washed and the carrier pins 24 and the distances between the bottom of the crate 20 and the arm 3 of the pressure-fixing system 13, the crate 20 being washed jumped up and down and rattled in the washing line 21. This was not a malfunction of the washing process, but in the longer term, the vibrations caused by the crate 20 jumping up and down could cause loosening of some joints of the pressure-fixing system 13 or the washing line 21.

Example 3

*Installation of spring segments into the existing washing line - three levels*

The flexible segments 1 assembled according to Example 1C, i.e. piston flexible segments, were fixed to the stationary side frame 23 of the wash zone 22 of the washing line 21 with the pin-chain conveyor 14 by means of two fixing holes 10 in the profile 7 for attaching the spring segment 1 using the fasteners 12, which were the screws with nuts. According to Example 1C, the flexible segments 1 were made in two embodiments, for mounting on the right side frame 23 and for mounting on the left side frame 23 of the washing line 21. Both flexible segments 1 differed by the connection of the profiled arm 3 to the cylindrical bushing 2, wherein the free end of the arm 3 after being mounted on the side frame 23 of the washing line 21 was always oriented into the internal wash zone 22 of the washing line 21 in the direction of travel of the pin-chain conveyor 14. The spacing *a* of the adjacent flexible segments 1 in the wash zone 22 corresponded to the sum of the length of the crate 20, parallel to the travel axis and the length of the profiled arm 3 divided by three, i.e. $a = (p_D + r) / 3$.

The length of crate 20 $p_D$ = 40 cm, the length of arm 3 *r* = 8 cm. The spacing of fixing points of flexible segments 1 $a = (40 + 8) /3 = 16$ cm.

The individual flexible segments 1 were fixed in the wash zone 22 at three different heights and thus formed three levels of the built-in pressure-fixing system 13. The height of the last highest level was chosen according to the height of the crate 20 to be washed; the level of the built-in pressure-fixing system 13 had arms 3 at a height less than the sum of the height of the carrier pin 24 and the height of the crate 20.

The height of the crate 20 was less than the height of the wash zone 22 of the washing line 21 minus the height of the carrier pin 24, i.e. $p_V < m - k$, and therefore at least one height of the pairs of flexible segments 1 is less than $p_V + k$, in this case $p_V + 9/10k$.

Specifically:
The height of crate 20 $p_V$ = 20 cm, the height of wash zone 22 *m* = 30 cm, the height of carrier pin 24 *k* = 8 cm, i.e. 20 < 30 - 8. Therefore, the last highest level of flexible segments 1 was located at a height $p_V + 9/10k$, i.e. 20 + 7.2 = 27.2 cm.

Thus, the bottom of the crate 20 being turned upside down and placed in the wash zone 22 abutted under the arms 3 of the last highest level of the pressure-fixing system 13 with a gap, which did not exceed the height of the carrier pin 24. The two lower levels of the pressure-fixing system 13 were positioned at heights $1/3*(p_V + 9/10k)$ and $3/4*(p_V + 9/10k)$ and opened by the passing crate 20 as it passed through the wash zone 22 of the washing line 21. The flexible segments 1 were always placed in pairs over the entire length of the wash zone 22, i.e. two flexible segments 1 were placed opposite each other in the wash zone 22 at the same distance from the entrance to the wash zone 22 and at the same height.

After placing all the flexible segments 1 in the washing line 21, the washing line 21 was started. The crates 20 to be washed were carried by the carrier pins 24 through the wash zone 22. The carrier pins 24 were adjusted to the spacing of the crates 20 to be washed, wherein the spacing of carrier pins 24 was less than the width of the crate 20. The last level of the built-in pressure-fixing system 13 was not opened by the crates 20 but fixed the crates 20 from above and prevented the crates 20 from jumping off the carrier pins 24 due to the action of pressurized water. The other two lower levels of the pressure-fixing system 13 fixed the crates 20 from the sides. The individual crates 20, when passing through the wash zone 22, opened the arms 3 of the two lower levels of spring segments 1, wherein the arms 3 pushed back onto the crates 20 under the action of a piston, and so the arms 3 hold the crates 20 fixed in place. The crate 20 being washed was always attached at least under four flexible segments 1 when passing through the washing line 21. The washing process was smooth, there was no jamming of the washing line 21, nor any of the crates 20 move outside the designated area. Despite the action of pressurized water, the crates 20 were firmly fixed in place by the pressure-fixing system 13 and the crates 20 did not jump up during washing.

Example 4

*Installation of spring segments into the existing washing line on a positionable self-sliding frame, washing of small and large crates*

The spring segments 1 assembled according to Example 1D, i.e. the spring segments, were mounted on a sliding frame built into the wash zone 22 of the washing line 21 with the pin-chain conveyor 14. According to Example 1D, the flexible segments 1 were made in two embodiments, for mounting on the right built-in frame and for mounting on the left built-in frame. Both flexible segments 1 differed by the direction of the spring 5 coiling and connection of the profiled arm 3 to the cylindrical bushing 2, wherein the free end of the arm 3 after being mounted on the built-in frame was always oriented into the internal wash zone 22 of the washing line 21 in the direction of travel of the pin-chain conveyor 14. The flexible segments 1 were mounted on the sliding built-in frame by means of two fixing holes 10 in the profile 7 for attaching the flexible segment 1 using the fasteners 12, which were the screws and nuts. The individual flexible segments 1 were mounted on the sliding built-in frame at five different heights and formed the five levels of the built-in pressure-fixing system 13. The height spacing of the individual levels was chosen so that the individual levels were evenly spaced up to the upper guide skid of the internal wash zone 22 of the washing line 21. The individual levels had a constant distance between them.
The height of wash zone 22 $m$ = 30 cm, the height of carrier pin 24 $k$ = 8 cm, the individual levels were placed at the following heights:

$k + 1/6*(m-k); k + 2/6*(m-k); k + 3/6*(m-k); k + 4/6*(m-k); k + 5/6*(m-k);$
i.e. 11.7 cm; 15.3 cm; 19 cm; 22.7 cm; 26.3 cm. At a height of 30 cm, the upper guide skid of the wash zone 22 was placed, which acted as an upper stop for the high crates 20.

The individual flexible segments 1 located on one level in the direction of travel of the pin-chain conveyor 14 were spaced apart by a dimension $a$ smaller than the sum of the length of the crate 20 and the length of the profiled arm 3 divided by two, i.e. $a < (p_D + r)/2$.
The smallest length of the crate 20 to be washed in the direction of travel $p_D$ = 20 cm, the arm length $r$ = 6 cm. The spacing of fixing points of flexible segments 1 $a = (p_D + r)/2 - 1/6r = (20 + 6)/2 - 1 = 12$ cm.
The flexible segments 1 were always placed in pairs over the entire length of the wash zone 22, i.e. the left and right spring segment 1 were placed opposite each other on a built-in sliding frame at the same distance from the entrance to the wash zone 22 of the washing line 21 at the same height. Thus, the crate 20 being washed was always attached at least under four flexible segments 1 when passing through the washing line 21. The entire built-in system had a supporting frame, two sliding frames fitted with five levels of flexible segments 1 placed in pairs and two pistons located at the top of the supporting frame and sliding frames, connecting the supporting frame and sliding frames together. The sliding frames had brackets with vertical grooves for variable height placement of the pressure-fixing system 13. The supporting frame also had a wall with vertical brackets. Through the grooves in the brackets, the individual flexible segments 1 were fixed using the fasteners 12, which were the screws and nuts, through the fixing holes 10 in the profile 7 for attaching the spring segment 1. After all the levels were placed on the sliding frames, the sliding frames were mounted on the supporting frame and attached to the sliding pistons. The sliding pistons were air-powered and connected to the air intake. The sliding pistons were controlled either by manually controlled air supply or automatically controlled air supply. The entire installation system fitted with the pressure-fixing system 13 was installed in the wash zone 22 of the existing washing line 21 with the pin-chain conveyor 14. The spacing of the sliding frames was adjusted by a piston to the spacing corresponding to the width of large crates 20. The carrier pins 24 of the conveyor 14 of the washing line 21 were adjusted to the spacing of large crates 20, wherein the spacing of carrier pins 24 was less than the width of the crate 20. The crates 20 to be washed were carried by the carrier pins 24 through the wash zone 22 of the washing line 21.
First, the high crates 20 were washed, where the height of the crate 20 was greater than the height of the wash zone 22 of the washing *line* 21 minus the height of the carrier pin 24, i.e. $p_V > m - k$.
The height of crate 20 $p_V$ = 27 cm, the height of wash zone 22 $m$ = 30 cm, the height of carrier pin 24 $k$ = 8 cm, i.e. 27 > 30 - 8.
The individual levels of flexible segments 1 could thus be positioned completely arbitrarily, but the condition of placing the flexible segments 1 in pairs had to be maintained. Thus, the bottom of the highest crate 20 turned upside down and placed in the wash zone 22 of the washing line 21 abutted under the upper guide skids. All other flexible segments 1 were opened by the crate 20 passing through and fixed the crate 20 from the sides. The lowest level of the pressure-fixation system 13 was placed higher on the built-in self-sliding system than the top of the carrier pin 24 of the washing line 21 so that the sliding frame can slide also over the carrier pin 24.

The spacing $a$ of flexible segments 1 or of their fixing points was initially set to 12 cm, thereby fulfilling the condition that $a < (p_D + r)/2$, since the crate length 20 $p_D$ = 20 cm and the arm length $r$ = 6 cm.

Then the lower crates 20 were washed continuously, wherein the height of the crate 20 was less than the height of the wash zone 22 of the washing line 21 minus the height of the carrier pin 24, i.e. $p_V < m - k$.

The height of crate 20 $p_V$ = 20 cm, the height of wash zone 22 $m$ = 30 cm, the height of carrier pin 24 $k$ = 8 cm, i.e. 20 < 30 - 8. The crate 20, when lifted up by the pressurized water, was stopped by the level of the closed flexible segments 1 protruding into the wash zone 22, located at a height of 22.7 cm, i.e. the last but one level.

The bottom of the crate 20 being turned upside down and placed in the wash zone 22 abutted under the arms 3 of the last but one highest level of the pressing system with a gap, which did not exceed the height of the carrier pin 24. The three lower levels of the pressing system were opened by the crate 20 as it passed through the wash zone 22 of the washing line 21 and fixed the crates 20 from the sides. The two highest levels of the pressing system were not opened by the crate 20 passing through, but the last but one highest level fixed the crates 20 from above and prevented the crate 20 from jumping off the carrier pin 24. The flexible segments 1 were always placed in pairs over the entire length of the wash zone 22, i.e. two spring segments 1 were placed opposite each other in the wash zone 22 at the same distance from the entrance to the wash zone 22 and at the same height. The individual crates 20, when passing through the wash zone 22, opened the arms 3 of the spring segments 1 of the first three levels, wherein the arms 3 pushed back onto the crates 20 under the action of a pre-stressed spring 5, and so the arms 3 hold the crates 20 fixed in place. The washing process was smooth, there was no jamming of the washing line 21, nor any of the crates 20 move outside the designated area. Despite the action of pressurized water, the large crates 20 were firmly fixed in place by the pressing system and the crates 20 did not jump up during washing.

The washing line 21 was then stopped and the spacing of sliding frames was adjusted by pistons to the spacing corresponding to the width of small crates 20. The carrier pins 24 of the washing line 21 were adjusted to the spacing of small crates 20, wherein the spacing of carrier pins 24 was less than the width of the crate 20.

The height of crate 20 $p_V$ = 17 cm, the height of wash zone 22 $m$ = 30 cm, the height of carrier pin 24 $k$ = 8 cm, i.e. 17 < 30 - 8.

The crates 20 to be washed were carried by the carrier pins 24 through the wash zone 22 of the washing line 21. The last three levels of the built-in pressure-fixing system 13 was not opened by the crates 20 but the third level of the pressing system placed at a height of 19 cm fixed the crates 20 from above and prevented the crates 20 from jumping off the carrier pins 24 due to the action of pressurized water. The other two lower levels of the pressure-fixing system 13 fixed the small crates 20 from the sides. The individual crates 20, when passing through the wash zone 22, opened the arms 3 of the flexible segments 1, wherein the arms 3 pushed back onto the crates 20 under the action of a pre-stressed spring 5, and so the arms 3 hold the crates 20 firmly fixed when passing through the wash zone 22. The washing process was smooth, there was no jamming of the washing line 21, nor any of the crates 20 move outside the designated area. Despite the action of pressurized water, the small crates 20 were firmly fixed in place by the pressing system and the crates 20 did not jump up during washing.

Example 5

*Installation of flexible lamellas in the existing washing line - rubber*

The flexible segments 1 assembled according to Example 1A, i.e. 2cm high rubber lamellas with an arm length of 8 cm were fixed, always two above each other, to the stationary side frame 23 of the wash zone 22 of the washing line 21 with the pin-chain conveyor 14 by means of attachment bars and fasteners 12, which were the screws provided with washers and nuts. The first half of flexible segments 1 were mounted on the right stationary side frame 23 and the other half of flexible segments 1 were mounted on the left stationary side frame 23. After assembly, the free end of the rubber rectangles was always oriented into the internal wash zone 22 of the washing line 21. All of the flexible segments 1 were fixed at two heights in the wash zone 22 of the washing line 21, thus forming two levels of the pressing system. The height of the higher level was chosen according to the height of the crate 20 to be washed and the height of the carrier pin 24 - the level of the built-in pressure-fixing system 13 had the lower edge of flexible segments 1, i.e. the rubber rectangles, at a height less than the sum of the height of carrier pin 24 and the height of crate 20.

The crate 20 was low, i.e. the height of the crate 20 was less than the height of the wash zone 22 of the washing line 21 minus the height of the carrier pin 24, i.e. $p_V < m - k$.

The height of crate 20 $p_V$ = 10 cm, the height of wash zone 22 $m$ = 30 cm, the height of carrier pin 24 $k$ = 3 cm, i.e. 10 < 30 - 3. The last highest level of flexible segments 1 or the location of fixing points of flexible segments 1, was at a height of $p_V + 2/3k$, i.e. 10 + 2 = 12 cm. With 2cm height of the flexible segment 1 and location of the fixing point exactly in the middle of the clamping side of flexible segment, the bottom of the crate 20 being turned upside down and placed in the wash zone 22 of the washing line 21 abutted under the edge of the last level of the rubber flexible segments 1 of the pressure-fixing system 13 with a gap of 1 cm, which did not exceed the height of the carrier pin 24. So the crate 20 could not jump off the carrier pin 24 as it passed through the wash zone 22, since, when jumping up, the crate 20 was stopped from above by the lower edge of the flexible segment 1 which is a rubber rectangle. The first level of flexible segments 1 was located at a height $(p_V + 2/3\ k)/2$, i.e. 6 cm.

The individual flexible segments 1 located on one level in the direction of passage of the crate 20 through the wash zone 22 of the washing line 21 were spaced apart by a dimension $a$ smaller than the sum of the length of the crate 20 to be washed in the direction of its travel and the length of the flexible segment 1, i.e. the length of the rubber rectangle divided by two, i.e. $a < (p_D + r)/2$.

The length of crate 20 $p_D$ = 40 cm, the length of arm 3 $r$ = 8 cm. The spacing of fixing points of flexible segments 1 $a = (p_D + r)/2 - 1/4r = (40 + 8)/2 - 2 = 22$ cm.

The flexible segments 1 were always placed in pairs over the entire length of the wash zone 22, i.e. two flexible segments 1 were placed opposite each other in the wash zone 22 at the same distance from the entrance to the wash zone 22 and at the same height.

After placing all the flexible segments 1 in the wash zone 22, the washing line 21 was started. The crates 20 to be washed were carried by the pins 24 through the wash zone 22. The carrier pins 24 were adjusted to the spacing of the crates 20 to be washed, wherein the spacing of carrier pins 24 was less than the inner width of the crate 20 and at the same time the space between the inner wall of the crate 20 and the carrier pin 24 was no more than 10 % of the width of the crate 20 to be washed. The first level of the built-in pressure-fixing system 13 was opened by the crates 20 carried through and thus fixed the crates 20 from the sides with a pressing force corresponding to the stiffness of rubber from which the flexible segments 1 had been made. The second level of the built-in pressure-fixing system was not opened by the crates 20 but fixed the crates 20 from above and prevented the crates 20 from jumping off the carrier pins 24 due to the action of pressurized water. Thus, the crate 20 being washed was always attached at least under four flexible segments 1 when passing through the washing line 21. The washing process was smooth, there was no jamming of the washing line 21, nor any of the crates 20 move outside the designated area. Due to the action of pressurized water and the distances between the inner wall of the crate 20 being washed and the carrier pins 24 and the distances between the bottom of the crate 20 and the lower edge of the second level of the pressing system, the crate 20 being washed jumped up and down and rattled in the washing line 21. This was not a malfunction of the washing process, but in the longer term, the vibrations caused by the crate 20 jumping up and down could cause loosening of some joints of the pressure-fixing system 13 or the washing *line* 21.

Example 6

*Installation of flexible lamellas in the existing washing line - brush*

The flexible segments 1 assembled according to Example 1B, i.e. 5 cm long, were fixed to the stationary side frame 23 of the wash zone 22 of the washing line 21 with the pin-chain conveyor 14 by means of attachment bars and fasteners 12, which were the screws provided with washers and nuts. The first half of flexible segments 1 were mounted on the right stationary side frame 23 and the other half of flexible segments 1 were mounted on the left stationary side frame 23. After assembly, the free end of bristles was always oriented into the internal wash zone 22 of the washing line 21. The brush-like flexible segments 1 mounted in the clamping bars had the clamping bars long enough to extend vertically in the wash zone 22 of the washing line 21 from the conveyor 14 plane up to the upper guide skids, thus having a height equal to the wash zone height of 22 *m*. Thus, the bottom of the crate 20 being turned upside down and placed in the wash zone 22 of the washing line 21 opened the flexible segments 1, i.e. the bristles, from the plane of the conveyor 14 up to the height of the crate 20. The first bristle not opened by the crate 20 carried through already fixed the crate 20 from above against jumping off the carrier pin 24. The individual vertically placed brushes were spaced apart by a dimension $a$ less than the sum of the length of the crate 20 being washed in the direction of its travel and the length of the flexible segment 1, i.e. the length of the bristle, divided by two. I.e. $a < (p_D + r)/2$. The length of crate 20 $p_D$ = 30 cm, the length of arm 3 $r$ = 5 cm. The spacing of fixing points of flexible segments 1 $a = (p_D + r)/2 - 1/5r = (30 + 5)/2 - 1 = 16.5$ cm.

The flexible segments 1 were always placed in pairs over the entire length of the wash zone 22, i.e. two flexible segments 1 were placed opposite each other in the wash zone 22 at the same distance from the entrance to the wash zone 22.

After placing all the flexible segments 1 in the wash zone 22, the washing line 21 was started. The crates 20 to be washed were carried by the pins 24 through the wash zone 22. The carrier pins 24 were adjusted to the spacing of the crates 20 to be washed, wherein the spacing of carrier pins 24 was less than the inner width of the crate 20 and at the same time the space between the inner wall of the crate 20 and the carrier pin 24 was no more than 10 % of the width of the crate 20 to be washed. The bristles of the built-in pressure-fixing system 13 were opened by the crates 20 carried through and thus fixed the crates 20 from the sides with a pressing force corresponding to the stiffness of material from which the bristles had been made. The bristles placed higher than the height of the crate 20 were not opened by the crate 20, but fixed the crates 20 from above and prevented the crates 20 from jumping off the carrier pins 24 due to the action of pressurized water. Thus, the crate 20 being washed was always attached at least under four sets of bristles when passing through the washing line 21. The washing process was smooth, there was no jamming of the washing line 21, nor any of the crates 20 move outside the designated area. Due to the action of pressurized water and the distances between the inner wall of the crate 20 being washed and the carrier pins 24, the crate 20 being washed rattled a little bit in the washing line 21. This was not a malfunction of the washing process.

List of marks for terms

1.    Flexible segment
2.    Cylindrical bushing
3.    Arm
4.    Pin
5.    Spring
6.    Sliding bushing
7.    Profile for attaching the flexible segment 1
8.    Lock washer
9.    Locking hole of the lock washer 8
10.    Fixing hole of the profile 7 for attaching the spring segment 1
11.    Mounting hole
12.    Fastener
13.    Built-in pressure-fixing system
14.    Conveyor
20.    Crate
21.    Washing line
22.    Wash zone of the washing line 21
23.    Frame
24.    Pin of the conveyor 14
26.    Nozzle
27.    Crate travel axis
28.    Fixing point of the flexible segment 1
29.    Connecting line of the fixing points of flexible segments 1
30.    Free end of the flexible segment 1

Applicability in Industry

Washing lines for crates and boxes, crate fixation, increased washing efficiency and flawlessness of the washing line operation .

**Claims**

**1.**    A built-in pressure and fixing crate system (13) designed for crate (20) washing lines (21) comprising flexible segments (1), **characterized in that** the flexible segments (1) are placed in pairs and have a pressing force counteracting a direction of opening of the flexible segments (1) by the moving crate (20) and the pressing force of the flexible segments (1) in one pair is equal and opposite and the flexible segments (1) of one pair are placed against each other on opposite frames (23), wherein the flexible segments (1) are fixed on one side at fixing points (28), wherein the fixing points (28) of the pair of flexible segments (1) lies on a connecting line (29) of fixing points (28) of flexible segments (1) perpendicular to the axis (27) of the travel of the crate (20) and the distance *a* of fixing points (28) of flexible segments (1) on one frame (23) parallel to the axis (27) of the crate (20) travel is less than $(p_D + r)/2$, where $p_D$ is the length of the side of the crate (20) parallel to the axis (27) of the crate (20) travel and *r* is the distance of perpendiculars to the axis (27) of the crate (20) travel, wherein one perpendicular passes through the fixing point (28) of the flexible segment (1) and the other perpendicular passes through the free end (30) of the flexible segment (1), and the height of the location of the flexible segments (1) is governed by the following rules:

if $p_V > m - k$, then the pairs of flexible segments (1) are located at any height of the internal wash zone (22) of the washing line (21),

if $p_V \leq m - k$, then the pairs of flexible segments (1) are located at least at one height and at a maximum distance of $p_V + k$ from the conveyor (14),

where $p_V$ is the height of the crate (20); $m$ is the height of the internal wash zone (22) of the washing line (21); and $k$ is the height of the carrier pin (24) on the conveyor (14).

2. The built-in pressure and fixing crate system (13) according to claim 1, **characterized in that** at least one frame (23) is built in

3. The built-in pressure and fixing crate system (13) according to claim 1 or 2, **characterized in that** at least on frame (23) is positionable.

4. The built-in pressure and fixing crate system (13) according to claim 1, **characterized in that** the flexible segments (1) are placed on the frame (23) one after the other in a horizontal direction and/or above each other in a vertical direction and/or in rows/levels and/or in oblique rows and/or in columns.

5. The built-in pressure and fixing crate system (13) according to claim 1, **characterized in that** the flexible segments (1) placed on the frame (23) in a distance less than $p + k$ from the conveyor (14) are placed at a height (p + 1/10k) to (p + 8/10k) from the conveyor (14).

6. The built-in pressure and fixing crate system (13) according to claim 1 or 5 or 6, **characterized in that** the flexible segments (1) are placed on the frame (23) at two heights, i.e. at the height *k + 1/3(m-k)* and *k + 2/3(m-k)*.

7. The built-in pressure and fixing crate system (13) according to claim 1 or 5 or 6, **characterized in that** the flexible segments (1) are placed on the frame (23) at three heights, i.e. at the height *k + ¼(m-k), k + 2/4(m-k)* and *k + ¾(m-k)* from the conveyor (14).

8. The built-in pressure and fixing crate system (13) according to claim 1 or 12, **characterized in that** the flexible segment (1) consists of a flexible lamella or consists of a brush with bristles.

9. The built-in pressure and fixing crate system (13) according to claim 1, **characterized in that** the flexible segment (1) consists of a spring-mounted profiled arm (3), which consists of a profiled rod or a rounded flat body.

10. The built-in pressure and fixing crate system (13) according to claim 15, **characterized in that** the flexible segment (1) consists of a spring (5), a profiled arm (3) and a profile (7) for attachment, wherein the profiled arm (3) has at least one bend and is connected to the spring (5), where the bending of the profiled arm (3) is at an angle of 60 to 110 degrees

11. The built-in pressure and fixing crate system (13) according to claim 15, **characterized in that** the spring (5) is put on a pin (4) and covered by a cylindrical bushing (2), wherein the cylindrical bushing (2) and the pin (4) are connected by a spring (5) and the profiled arm (3) is firmly connected to the cylindrical bushing (2).

12. The built-in pressure and fixing crate system (13) according to claim 19, **characterized in that** the pin (4) is seated in the sliding bushings (6) and is secured to the cylindrical bushing (2) by lock washers (8).

13. The built-in pressure and fixing crate system (13) according to claim 1, **characterized in that** the distance of flexible segments (1) in one pair is defined by the length F of the connecting line of fixing points (28) of the pair of flexible segments (1), where

$$p_{\check{s}} + 2 \cdot \tfrac{1}{2}\, r_a \leq F \leq p_{\check{s}} + 2 \cdot (r_a - 8\ mm),$$

where $p_{\check{s}}$ is the width of crate (20), $r_a$ is the distance of the end (30) of the arm (3) of the flexible segment (1) from the fixing point (28) in a direction perpendicular to the axis of the crate (20) travel.

14. The built-in pressure and fixing crate system (13) according to claim 24, **characterized in that** the length *F* of the connecting line of fixing points (28) of the pair of flexible segments (1) is

$$F = p_s + 2 \cdot (r_a - 10 \ mm).$$

$$F = p_s + 2 \cdot (r_a - 10 \ mm).$$

Fig. 1 A

Fig. 1 B

Fig. 1 C

Fig. 1 D

Fig. 2

Fig. 3 A

Fig. 3 B

Fig. 3 C

Fig. 3 D

Fig. 4 A

Fig. 4 B

Fig. 4 C

23

22

20

24

13

14

Fig. 4 D

26

1

22

26

23

23

14

24

Fig. 5 A

Fig. 5 B

Fig. 5. C

Fig. 5 D

Fig. 5 E

Fig. 6 A

Fig. 6 B

Fig. 6 C

Fig. 6 D

Fig. 7

Fig. 8 A

Fig. 8 B

Fig. 8 C

Fig. 8 D

Fig. 8 E

Fig. 8 F

23          7          28

3

Fig. 9

12    8
3                    12

30   2   12   8          7

3                    2

3                    30

12

7

Fig. 10 A

Fig. 10 B

Fig. 10 C

Fig. 10 D

Fig. 11

Fig. 12 A

Fig. 12 B

Fig. 12 C

Fig. 12 D

Fig. 13

Fig. 14 A

Fig. 14 B

Fig. 14 C

Fig. 15 A

1

Fig. 15 B

1

Europäisches
Patentamt

European
Patent Office

Office européen
des brevets

# EUROPEAN SEARCH REPORT

Application Number

EP 20 15 6597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NL 1 014 204 C1 (SYSTEMATE GROUP BV [NL]) 30 July 2001 (2001-07-30) * page 5, line 17 - page 7, line 25; figures 1-3 * | 1-10,13, 14 | INV. B08B9/08 B65G21/20 |
| A | EP 0 572 097 A1 (MAFO HOWDEN B V [NL]) 1 December 1993 (1993-12-01) * the whole document * | 1-14 | |
| Y | DE 103 33 357 A1 (PLATZ REINIGUNGSSYSTEME GMBH [DE]) 24 February 2005 (2005-02-24) * paragraph [0011] - paragraph [0016]; claim 1; figures 1,2,5 * | 1-10,13, 14 | |
| Y | DE 10 2010 031625 A1 (WVG KAINZ GMBH [DE]) 26 January 2012 (2012-01-26) * paragraph [0017] - paragraph [0018] * * paragraph [0030] - paragraph [0038]; figures 4-5 * | 1-4,13, 14 | |
| A | EP 3 030 505 A1 (KRONES AG [DE]) 15 June 2016 (2016-06-15) * claim 1; figures 1-3 * | 8-12 | TECHNICAL FIELDS SEARCHED (IPC) |
| A | KR 101 933 378 B1 (WOOJIN AUTOMATION CO LTD [KR]) 31 December 2018 (2018-12-31) * figures 2-5 * | 8-12 | B08B B65G |
| A | WO 2014/068263 A1 (BAA IP HOLDCO LTD [GB]) 8 May 2014 (2014-05-08) * figures 1-3,8-12 * | 8 | |
| A | DE 11 77 073 B (ALSACIENNE CONSTR MECA) 27 August 1964 (1964-08-27) * the whole document * | 1-14 | |

The present search report has been drawn up for all claims

| Place of search | Date of completion of the search | Examiner |
|---|---|---|
| The Hague | 25 June 2020 | Cassiat, Clément |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 15 6597

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2020

| Patent document cited in search report | | Publication date | Patent family member(s) | | Publication date |
|---|---|---|---|---|---|
| NL 1014204 | C1 | 30-07-2001 | NONE | | |
| EP 0572097 | A1 | 01-12-1993 | EP | 0572097 A1 | 01-12-1993 |
| | | | NL | 9200946 A | 16-12-1993 |
| DE 10333357 | A1 | 24-02-2005 | NONE | | |
| DE 102010031625 | A1 | 26-01-2012 | NONE | | |
| EP 3030505 | A1 | 15-06-2016 | CN | 105452133 A | 30-03-2016 |
| | | | DE | 102013215794 A1 | 12-02-2015 |
| | | | EP | 3030505 A1 | 15-06-2016 |
| | | | US | 2016176651 A1 | 23-06-2016 |
| | | | WO | 2015018564 A1 | 12-02-2015 |
| KR 101933378 | B1 | 31-12-2018 | NONE | | |
| WO 2014068263 | A1 | 08-05-2014 | NONE | | |
| DE 1177073 | B | 27-08-1964 | NONE | | |

EPO FORM P0459

For more details about this annex : see Official Journal of the European Patent Office, No. 12/82

**EP 3 693 094 A1**

**Patent documents cited in the description**

- NL 1014204